(19) Europäisches Patentamt
European Patent Office
Office européen des brevets

(11) Veröffentlichungsnummer: **0 194 523 B1**

# (12) EUROPÄISCHE PATENTSCHRIFT

(45) Veröffentlichungstag der Patentschrift: **22.04.92**

(51) Int. Cl.⁵: **C08L 77/00**, C08K 5/15

(21) Anmeldenummer: **86102610.2**

(22) Anmeldetag: **28.02.86**

Die Akte enthält technische Angaben, die nach dem Eingang der Anmeldung eingereicht wurden und die nicht in dieser Patentschrift enthalten sind.

## (54) Hydrophobierte, leichtfliessende thermoplastische Polyamide.

(30) Priorität: **09.03.85 DE 3508531**

(43) Veröffentlichungstag der Anmeldung:
**17.09.86 Patentblatt 86/38**

(45) Bekanntmachung des Hinweises auf die Patenterteilung:
**22.04.92 Patentblatt 92/17**

(84) Benannte Vertragsstaaten:
**CH DE FR GB IT LI NL**

(56) Entgegenhaltungen:
**EP-A- 0 112 542**
**EP-A- 0 140 377**
**BE-A- 671 138**
**DE-A- 2 755 188**

(73) Patentinhaber: **BAYER AG**
**W-5090 Leverkusen 1 Bayerwerk(DE)**

(72) Erfinder: **Schultz, Klaus-Dieter, Dr.**
**Kreuzbergstrasse 53**
**W-4150 Krefeld(DE)**
Erfinder: **Meyer, Rolf-Volker, Dr.**
**Buchheimer Strasse 23**
**W-4150 Krefeld(DE)**
Erfinder: **Fahnler, Friedrich**
**Wimmersweg 60**
**W-4150 Krefeld(DE)**
Erfinder: **Dhein, Rolf, Dr.**
**Deswatinesstrasse 30**
**W-4150 Krefeld(DE)**
Erfinder: **Dietrich, Michael, Dr.**
**Deswatinesstrasse 30**
**W-4150 Krefeld(DE)**

EP 0 194 523 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der Erfindung sind thermoplastisch verarbeitbare Polyamide, die spezielle Monoepoxidverbindungen enthalten und sich durch verbesserte Fließfähigkeit sowie verminderte Wasseraufnahme auszeichnen.

Das bekannte hochwertige Eigenschaftsniveau der thermoplastisch verarbeitbaren Polyamide hängt wesentlich von den zwischen verschiedenen Carbonamidgruppen wirksamen Wasserstoffbrücken ab. Auch die durch die Polarität der Carbonamidgruppen bedingte Hydrophilie hat darauf einen großen Einfluß, da sie eine deutlich meßbare Wasseraufnahme sowohl bei Wasserlagerung als auch im Normklima (s. z.B. Kunststoffhandbuch Band VI, Polyamide, Carl-Hanser-Verlag, München 1966, S. 458 ff.) verursacht.

So hängt z.B. die Schlagzähigkeit von Formkörpern aus Polyamiden erheblich vom Wassergehalt der Formkörper ab. Im wasserfreien Zustand, z.B. nach der Herstellung der Formkörper durch Spritzgießen, sind besonders die aus leicht fließenden und damit leicht verarbeitbaren Polyamiden mit mittleren Molekulargewichten hergestellten Formkörper relativ empfindlich gegen Schlagbeanspruchung. Dies gilt besonders für Formkörper aus teilkristallinen Polyamiden.

Je höher das Molekulargewicht des verwendeten Polyamids ist, desto mehr steigt auch seine Zähigkeit, aber desto mehr sinkt die Fließfähigkeit rasch aus ein für die Spritzgießverarbeitung unbefriedigendes Niveau ab.

Durch das Konditionieren mit Wasser kann die Zähigkeit dieser Formkörper deutlich verbessert werden. Es tritt jedoch parallel dazu eine Weichmachung der Produkte ein, die besonders deutlich durch eine drastische Verminderung der Steifigkeit, gemessen durch den E-Modul, zu beobachten ist.

Für viele Einsatzgebiete, insbesondere für Funktions- und Karosserieteile im Automobilsektor, ist jedoch eine hohe Steifigkeit und ausreichende Zähigkeit der Formteile notwendig.

Da die Wasseraufnahme bei Polyamiden auch von deren Kristallinität abhängt, kann diese in geringem Maße durch kristallisationsfördernde Zusätze und durch geeignete Nachbehandlung (z.B. Tempern) beeinflußt werden. Eine entscheidende Veränderung der Wasseraufnahme kann aber dadurch bei teilkristallinen Polyamiden wie z.B. PA-6,6 nicht erreicht werden.

Es sind eine Reihe von Verfahrensweisen bekannt geworden, die Zähigkeit von Polyamiden auch im spritz frischen Zustand, d.h. ohne den zähigkeitsfördernden Einfluß des Wassers zu verbessern. Dies gelingt z.B. durch Zumischen von bestimmten elastomeren Polymeren. So wurden u.a. Polyethylene, Copolymerisate des Ethylens mit polaren Comonomeren wie Vinylacetat, (Meth)acrylsäure(ester) als zähigkeitsverbessernde Zusätze vorgeschlagen oder geeignete modifizierte Kautschuke wie z.B. Copolymere aus Butadien und Acrylnitril.

In all diesen Fällen wird eine Verbesserung der Zähigkeit der Produkte erzielt. Da aber die Neigung des in der Regel als Hauptkomponente vorliegenden Polyamids zu einer Wasseraufnahme bis zu 10 % unverändert erhalten bleibt, verschlechtert im allgemeinen die hohe Wasseraufnahme die durch den polymeren Zähigkeitsmodifikator bereits verminderte Steifigkeit meist so stark, daß die Produkte für technische Teile mit hohen Ansprüchen an Steifigkeit, Zähigkeit und Dimensionsstablität ungeeignet sind.

Bei Polyamiden aus langkettigen amidbildenden Bausteinen, d.h. bei Produkten mit geringeren Konzentrationen an CONH-Gruppen in den Polymerketten wird zwar deutlich weniger Wasser aufgenommen und der entsprechende Einfluß auf die mechanischen Eigenschaften ist geringer, trotzdem weisen die Produkte für viele Anwendungen eine zu geringe Wärmeformbeständigkeit und Steifigkeit auf und sind darüber hinaus wegen des hohen Preises der Ausgangsstoffe kostspielig.

Bekannt ist, daß der Zusatz spezieller substituierter Phenole (DOS 3 248 329) zu einer deutlich verminderten Wasseraufnahme führt.

In der DE-A-2 755 188 wird eine Zusammensetzung aus Polyarylpyrrolidon und geringen Anteilen eines Alkylepoxids zur Wärmestabilisierung (Verringerung der Monomerbildung und Absenkung der Verarbeitungstemperatur) beschrieben.

Weiterhin ist auch bekannt, daß der Zusatz von Oxicarbonylisocyanaten (DE 3 023 918) zu Polyamiden das Fließverhalten verbessert und somit die Spritzgießverarbeitung erleichtert.

Keine dieser Maßnahmen ist jedoch geeignet, sowohl die Herstellung von Polyamiden mit verbesserter Fließfähigkeit als auch verminderter Wasseraufnahme zu ermöglichen.

Es besteht jedoch ein Bedarf an Polyamiden, die auch nach Konditionierung hohe Wärmeformbeständigkeit, hohe Steifigkeit, befriedigende Zähigkeit und gegenüber unmodifiziertem PA-6 bzw. PA-6,6 verbesserte Dimensionsstabilität und verbesserte Fließfähigkeit besitzen.

Überraschenderweise wurde nun gefunden, daß man die Wasseraufnahme von Polyamiden, vorzugsweise von teilkristallinen Polyamiden, senken und gleichzeitig die Fließfähigkeit deutlich erhöhen kann und somit Polyamide mit der angegebenen Eigenschaftskombination erhält, wenn man die Polyamide mit

ausgewählten Monoepoxidverbindungen modifiziert.

Gegenstand der Erfindung sind daher thermoplastische, leichtfließende, hydrophobe Polyamide, erhalten durch Einarbeitung von 2-15 Gew.-%, bezogen auf Polyamidmasse, mindestens einer Monoepoxidverbindung der allgemeinen Formel (I)

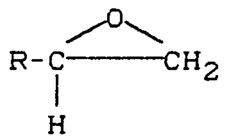

(I)

in der

R einen Kohlenwasserstoffrest mit mindestens vier Kohlenstoffatomen bedeutet,

in Polyamide auf Basis linearer, thermoplastischer Polykondensate von Lactamen mit 6-12 Kohlenstoffatomen, Polyamid-4,6; -6,6; -6,7; -6,8; -6,9; -6,10; -6,12; -8,8 und -12,12, Polykondensate auf der Basis von Isophthalsäure, Terephthalsäure, Adipinsäure, Korksäure, Sebacinsäure, Cyclohexandicarbonsäure oder Cyclohexandiessigsäure und Xylylendiaminen, Hexamethylendiamin, Octamethylendiamin, Diaminodicyclohexylmethanen- bzw. Isophorondiamin, Gemische der genannten Polyamide oder Copolyamide auf der Basis der genannten Monomeren oder mit Elastomeren modifizierte Polyamide mit einer relativen Viskosität der einzusetzenden Polyamide von mindestens 1,8 (gemessen in 1 %iger Lösung in m-Kresol bei 25 °C).

R ist vorzugweise ein gegebenenfalls substituierter und/oder verzweigter aliphatischer Rest mit $C_6$-$C_{20}$, vorzugsweise $C_8$-$C_{16}$ oder araliphatischer Rest mit $C_7$-$C_{20}$, vorzugsweise $C_7$-$C_{16}$. Besonders bevorzugt ist R ein gegebenenfalls substituierter und/oder verzweigter Alkylrest mit $C_{10}$-$C_{16}$.

Die erfindungsgemäß zur Modifizierung von Polyamiden einzusetzenden Monoepoxidverbindungen sind bekannt und ihre Herstellung ist beschrieben. Auch Gemische der Epoxidverbindungen können eingesetzt werden.

Beispiele für die erfindungsgemäß einzusetzenden Monoepoxide sind: Hexen-1-oxid, Octen-1-oxid, Decen-1-oxid, Dodecen-1-oxid, Tetradecen-1-oxid, Hexadecen-1-oxid, Octadecen-1-oxid, ω-Phenylbuten-1-oxid, ω-Phenyldodecenoxid.

Die Monoepoxidverbindungen werden in Mengen von 2-15, vorzugsweise 3-10 Gew.-% bezogen auf das Polyamid, eingesetzt.

Besonders bevorzugt werden die üblicherweise für technische Spritzgußartikel eingesetzten 6-, 6,6-, 6,9-, 6,10-, 6,12-, 11- und 12-Polyamide verwendet sowie Copolyamide, die zum überwiegenden Anteil aus den Monomeren der obengenannten Polyamide aufgebaut sind und deren rel. Viskosität, gemessen wie oben angegeben, im Bereich von 2,5-4,0 liegt.

Zur Herstellung der erfindungsgemäß modifizierten Polyamide werden die Polyamidkomponente und die Epoxidkomponente, vorzugsweise oberhalb des Schmelzpunktes des Polyamids, miteinander vermischt. Dies kann unmittelbar nach der Herstellung des Polyamids durch Vermischen der Epoxide mit der als Strang abzuspinnenden Schmelze erfolgen.

Vorzugsweise werden die erfindungsgemäß modifizierten Polyamide durch Mischen der Ausgangskomponenten in üblichen Schneckenmaschinen hergestellt.

Dabei eignen sich sowohl Maschinen mit einfachen als auch solche mit Doppelschnecken. Doppelschneckenextruder werden bevorzugt eingesetzt, obgleich auch jede andere Mischvorrichtung verwendet werden kann, die zum Plastifizieren von Kunststoffen geeignet ist.

In die erfindungsgemäßen schnellfließenden, hydrophobierten Polyamide können für den Einsatz als thermoplastische Formmassen zusätzlich auch Stabilisatoren, Entformungsmittel, Gleitmittel, Kristallisationsbeschleuniger, Weichmacher, Pigmente, Farbstoffe, Versteifungs-und/oder Füllstoffe, wie Glasfasern oder Asbest, eingearbeitet werden, wobei vorzugsweise die Einarbeitung dieser Zusätze gleichzeitig mit der Einarbeitung des Epoxidmodifikators erfolgt.

Die erfindungsgemäß modifizierten Polyamide sind besonders leichtfließende Produkte, die sich in handelsüblichen Spritzgußmaschinen problemlos zu Formkörpern verarbeiten lassen, die eine gegenüber unmodifizierten Vergleichsprodukten deutlich reduzierte Wasseraufnahme aufweisen unter Beibehaltung der sonstigen polyamidtypischen guten Gebrauchseigenschaften.

Die Polyamidformmassen eignen sich besonders zur Herstellung von solchen Formkörpern nach dem Spritzgießverfahren, die lange Fließwege erfordern. Aufgrund der verminderten Wasseraufnahme eignen sich diese Formkörper, besonders die glasfaserverstärkten Produkte, infolge ihrer verbesserten Dimensionsstabilität für Teile im Automobilbau.

Beispiel 1

94 Gew.-% eines Polyamid-6 mit einer relativen Viskosität von 2,8, gemessen in 1 %iger Lösung in m-Kresol, wird über eine Dosierwaage und 6 Gew.-% Dodecen-1-oxid über eine Dosierpumpe synchron in einen Zweiwellenextruder vom Typ ZSK 53 gefördert und bei 260 ° C mit 90 UpM extrudiert. Die homogene Schmelze wird als Strang in ein Wasserbad abgesponnen, granuliert und bei 80 bis 100 ° C bis zu einem Wassergehalt von ca. 0,1 % getrocknet. Das Produkt hat eine relative Viskosität von 2,5.

Aus dem Produkt hergestellte Formkörper werden zusammen mit unmodifizierten Vergleichsproben über längere Zeiträume in Normklima und in Wasser gelagert. Das erfindungsgemäß modifizierte Polyamid nimmt unter allen Bedingungen deutlich weniger Wasser auf. Die Fließfähigkeit, als Maß für die Spritzgieß-Verarbeitbarkeit, hat sich gleichzeitig deutlich verbessert von 79 cm auf eine Fließlänge *) von 95 cm. Die Meßdaten sind in Tabelle 1 zusammengestellt.

Beispiel 2-4

Analog Beispiel 1 werden 6 Gew.-% Dodecen-1-oxid in verschiedene Polyamide eingearbeitet und die erhaltenen Produkte wie in Beispiel 1 beschrieben untersucht. Die Zusammensetzung der modifizierten Polyamide und ihre Eigenschaften sind in Tabelle 1 aufgeführt.

Beispiele 5-10

In Tabelle 2 sind die Eigenschaften der Produkte aufgelistet, die durch verschiedene Monoepoxide bei gleichbleibender Polyamidkomponente erhalten werden. Aus dem Produkt hergestellte Formkörper werden zusammen mit unmodifizierten Vergleichsproben über längere Zeiträume im Normklima und in Wasser gelagert. Das erfindungsgemäß modifizierte Polyamid nimmt unter allen Bedingungen deutlich weniger Wasser auf.

*) Die Fließlänge ist ein Maß für die Fließfähigkeit eines Produktes und damit für seine Verarbeitbarkeit; höhere Fließlänge bedeutet bessere Fließfähigkeit und damit kürzere Spritzcyclen. Die Fließlänge wurde wie folgt bestimmt: In ein spezielles Werkzeug, das auf 90° gehalten wird, wird mittels einer Spritzgießmaschine, deren Zylindertemperatur 260°C beträgt, die zu untersuchende Probe mit einem Spritzdruck von 72 bar eingespritzt. Besonders leichtfließende Werkstoffe sind in der Lage, unter diesen Bedingungen das Werkzeug zu füllen, so daß man nachher eine 100 cm lange Spirale entnehmen kann. Weniger fließfähige Werkstoffe füllen unter den beschriebenen Bedingungen das Werkzeug nur teilweise; dann können infolge der vorzeitigen Erstarrung der Schmelze nur Spiralkörper von < 100 cm Länge erhalten werden. Als Fließlänge wird die Länge in cm angegeben, die 5mal reproduziert wurde.

**Tabelle 1** Modifizierung von Polyamiden mit Dodecen-1-oxid

| Bsp. | Typ | Einges. Polyamid: einges. $\eta_{rel}$ | Einges. Polyamid: Polyamid Gew.Tle. | Einges. Polyamid: Fließlänge (cm) | Einges. Polyamid: % $H_2O$-Aufn. 1) | Additiv wie in Bsp. 1 Gew.-Tl. | Produkteigenschaften des modifiz. Polyamids: $\eta_{rel}$ | Fließl. (cm) | % $H_2O$-Aufn. 1) | % Zunahme d. Fließl. | % reduzierte $H_2O$-Aufnahme |
|---|---|---|---|---|---|---|---|---|---|---|---|
| 1 | PA-6 | 2,8 | 94 | 79 | 8,37 | 6 | 2,5 | 95 | 6,68 | 20 | 20 |
| 2 | PA-6 | 3,0 | 94 | 73 | 7,79 | 6 | 2,6 | 100 | 5,46 | 37 | 30 |
| 3 | PA-6,6 | 3,0 | 94 | 65 | 2,96 | 6 | 2,8 | 75 | 2,37 | 15 | 20 |
| 4 | PA-6,9 | 3,5 | 94 | 45 | 2,62 | 6 | 3,2 | 56 | 2,18 | 24 | 17 |

1) % $H_2O$-Aufnahme von spritzgegossenen Rundplatten nach 42 Tagen Wasserlagerung bei 20°C

Tabelle 2 Modifizierung von 6-Polyamid ($\eta_{rel}$ = 2,8, Fließlänge: 79 cm, Wasseraufnahme[1]): 8,37 %) mit div. Epoxiden

| Bsp. | Additiv | Menge (Gew.Tle.) | Produkteigenschaften $\eta_{rel}$ | Fließl. (cm) | % $H_2O$-Aufn.[1]) | % Zunahme d. Fließl. | % reduzierte $H_2O$-Aufnahme |
|---|---|---|---|---|---|---|---|
| 5 | Decen-1-oxid | 6 | 2,6 | 95 | 6,49 | 20 | 22,46 |
| 6 | Dodecen-1-oxid | 3 | 2,5 | 85 | 7,09 | 8 | 15 |
| 7 | Dodecen-1-oxid | 6 | 2,5 | 95 | 6,68 | 20 | 20 |
| 8 | Dodecen-1-oxid | 10 | 2,5 | 99 | 6,44 | 25 | 23 |
| 9 | Tetradecen-1-oxid | 6 | 2,5 | 87 | 7,05 | 10 | 16 |
| 10 | Hexadecen-1-oxid | 6 | 2,6 | 85 | 6,90 | 8 | 18 |

1) % $H_2O$-Aufnahme von spritzgegossenen Rundplatten nach 42 Tagen Wasserlagerung bei 20° C

## Patentansprüche

1. Thermoplastische, leichtfließende, hydrophobe Polyamide erhalten durch Einarbeitung von 2-15 Gew.-%, bezogen auf Polyamidmasse, mindestens einer Monoepoxidverbindung der allgemeinen Formel (I)

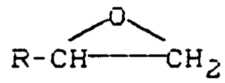 (I)

in der

R einen Kohlenwasserstoffrest mit mindestens vier Kohlenstoffatomen bedeutet,

in Polyamide auf Basis linearer, thermoplastischer Polykondensate von Lactamen mit 6-12 Kohlenstoffatomen, 4,6-, 6,6-, 6,7-, 6,8-, 6,9-, 6,10-, 6,12-, 8,8-, 12,12-Polyamid, Polykondensaten auf der Basis von Isophthalsäure, Terephthalsäure, Adipinsäure, Korksäure, Sebacinsäure oder Cyclohexandicarbonsäure oder Cyclohexandiessigsäure und Xylylendiaminen, Hexamethylendiamin, Octamethylendiamin, Diamino-di-cyclohexylmethanen bzw. Isophorondiamin, Gemische der genannten Polyamide auf Basis der genannten Monomeren oder mit Elastomeren modifizierte Polyamide,

mit einer relativen Viskosität der einzusetzenden Polyamide von mindestens 1,8 (gemessen in 1 %iger Lösung in m-Kresol bei 25° C).

**2.** Polyamide nach Anspruch 1, dadurch gekennzeichnet, daß in der allgemeinen Formel (I) R einen gegebenenfalls verzweigten aliphatischen Rest mit $C_6$-$C_{20}$ oder einen araliphatischen Rest mit $C_7$-$C_{20}$ bedeutet.

**3.** Polyamide nach Anspruch 1 oder 2, dadurch gekennzeichnet, daß die Monoepoxidverbindungen in Mengen von 3-10 Gew.-%, bezogen auf die Polyamidmassen, eingearbeitet werden.

**4.** Polyamide nach Ansprüchen 1 bis 3, dadurch gekennzeichnet, daß in der allgemeinen Formel (I) R einen gegebenenfalls verzweigten aliphatischen Rest mit $C_8$-$C_{16}$ oder einen araliphatischen Rest mit $C_7$-$C_{16}$ bedeutet.

**5.** Polyamide nach Ansprüchen 1 bis 4, dadurch gekennzeichnet, daß in der allgemeinen Formel (I) R einen gegebenenfalls substituierten und/oder verzweigten Alkylrest mit $C_{10}$-$C_{16}$ bedeutet.

**6.** Polyamide nach Ansprüchen 1-3, dadurch gekennzeichnet daß als Monoepoxidverbindungen Hexen-1-oxid, Octen-1-oxid, Decen-1-oxid, Dodecen-1-oxid, Tetradecen-1-oxid, Hexadecen-1-oxid, Octadecen-1-oxid, ω-Phenylbuten-1-oxid oder ω-Phenyldodecenoxid eingesetzt werden,

**7.** Polyamide nach Ansprüchen 1-6, dadurch gekennzeichnet, daß Polyamide auf Basis Polyamid 6, Polyamid 11, Polyamid 12, Polyamid 6,6, Polyamid 6,9, Polyamid 6,10, Polyamid 6,12 sowie Copolyamide, die zu überwiegendem Anteil aus Monomeren der obengenannten Polyamide aufgebaut sind und deren Viskosität im Bereich von 2,5-4,0 liegt eingesetzt werden.

**8.** Verwendung von leichtfließendem thermoplastischen hydrophoben Polyamiden nach Ansprüchen 1-7, zur Herstellung von Formkörpern im Spritzgußverfahren.

**9.** Formkörper aus Polyamiden nach Ansprüchen 1-7.

## Claims

**1.** Thermoplastic, free-flowing, hydrophobic polyamides obtained by incorporation of 2 to 15% by weight, based on polyamide, of at least one monoepoxide compound corresponding to general formula (I)

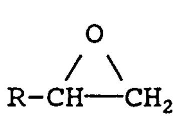 (I)

in which

R is a hydrocarbon radical containing at least 4 carbon atoms,

in polyamides based on linear, thermoplastic polycondensates of lactams containing 6 to 12 carbon

atoms, 4,6-, 6,6-, 6,7-, 6,8-, 6,9-, 6,10-, 6,12-, 8,8-, 12,12-polyamide, polycondensates based on isophthalic acid, terephthalic acid, adipic acid, suberic acid, sebacic acid or cyclohexane dicarboxylic acid or cyclohexane diacetic acid and xylylenediamines, hexamethylenediamine, octamethylenediamine, diaminodicyclohexyl methanes or isophoronediamine, mixtures of the above-mentioned polyamides based on the above-mentioned monomers or polyamides modified with elastomers,
the polyamides to be used having a relative viscosity of at least 1.8 (as measured on a 1% solution in m-cresol at 25 ° C).

**2.** Polyamides as claimed in claim 1, characterized in that, in general formula (I), R is an optionally branched, aliphatic $C_{6-20}$ radical or an araliphatic $C_{7-20}$ radical.

**3.** Polyamides as claimed in claim 1 or 2, characterized in that the monoepoxide compounds are incorporated in quantities of 3 to 10% by weight, based on the polyamide compounds.

**4.** Polyamides as claimed in claims 1 to 3, characterized in that, in general formula (I), R is an optionally branched, aliphatic $C_{8-16}$ radical or an araliphatic $C_{7-16}$ radical.

**5.** Polyamides as claimed in claims 1 to 4, characterized in that, in general formula (I), R is an optionally substituted and/or branched $C_{10-16}$ alkyl radical.

**6.** Polyamides as claimed in claims 1 to 3, characterized in that hex-1-ene oxide, oct-1-ene oxide, dec-1-ene oxide, dodec-1-ene oxide, tetradec-1-ene oxides hexadec-1-ene oxide, octadec-1-ene oxide, ω-phenylbut-1-ene oxide or ω-phenyl dodecene oxide.

**7.** Polyamides as claimed in claims 1 to 6, characterized in that polyamides based on polyamide 6, polyamide 11, polyamide 12, polyamide 6,6, polyamide 6,9, polyamide 6,10, polyamide 6,12 and copolyamides which are synthesized predominantly from monomers of the above-mentioned polyamides and which have a viscosity of 2.5 to 4.0 are used as the polyamides.

**8.** The use of the free-flowing, thermoplastic, hydrophobic polyamides claimed in claims 1 to 7, for the production of molded articles by injection molding.

**9.** Molded articles of the polyamides claimed in claims 1 to 7.

## Revendications

**1.** Polyamides hydrophobes thermoplastiques doués de fluidité, obtenus par incorporation de 2 à 15 % en poids, par rapport à la matière polyamidique, d'au moins un composé mono-époxyde de formule générale (I)

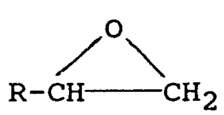

(I)

dans laquelle

R désigne un reste hydrocarboné ayant au moins 4 atomes de carbone,

dans des polyamides à base de polycondensats thermoplastiques linéaires de lactames ayant 6 à 12 atomes de carbone, de 4,6-, de 6,6-, de 6,7-, de 6,8-, de 6,9-, de 6,10-, de 6,12-, de 8,8-, de 12,12-polyamide, de polycondensats à base d'acide isophtalique, d'acide téréphtalique, d'acide adipique, d'acide subérique, d'acide sébacique ou d'acide cyclohexanedicarboxylique ou d'acide cyclohexanediacétique et de diaminoxylènes, d'hexaméthylènediamine, d'octaméthylènediamine, de diaminodicyclohexylméthanes ou d'isophoronediamine, des mélanges des polyamides mentionnés à base des monomères indiqués ou des polyamides modifiés par des élastomères,

avec une viscosité relative des polyamides devant être utilisés d'au moins 1,8 (mesurée sur une solution à 1 % dans le m-crésol à 25 ° C).

2. Polyamides suivant la revendication 1, caractérisés en ce que dans la formule générale (I), R représente un reste aliphatique éventuellement ramifié en $C_6$ à $C_{20}$ ou un reste araliphatique en $C_7$ à $C_{20}$.

3. Polyamides suivant la revendication 1 ou 2, caractérisés en ce que les composés du type mono-époxyde sont incorporés en quantités de 3 à 10 % en poids sur la base des matières polyamidiques.

4. Polyamides suivant les revendications 1 à 3, caractérisés en ce que dans la formule générale (I), R désigne un reste aliphatique éventuellement ramifié en $C_8$ à $C_{16}$ ou un reste araliphatique en $C_7$ à $C_{16}$.

5. Polyamides suivant les revendications 1 à 4, caractérisés en ce que dans la formule générale (I), R désigne un reste alkyle en $C_{10}$ à $C_{16}$ éventuellement substitué et/ou ramifié.

6. Polyamides suivant les revendications 1 à 3, caractérisés en ce qu'on utilise comme composés du type mono-époxyde l'oxyde d'hexène-1, l'oxyde d'octène-1, l'oxyde de décène-1, l'oxyde de dodécène-1, l'oxyde de tétradécène-1, l'oxyde d'hexadécène-1, l'oxyde d'octadécène-1, l'oxyde d'ω-phénylbutène-1 ou l'oxyde d'ω-phényldodécène.

7. Polyamides suivant les revendications 1 à 6, caractérisés en ce qu'on utilise des polyamides à base de Polyamide 6, de Polyamide 11, de Polyamide 12, de Polyamide 6,6, de Polyamide 6,9, de Polyamide 6,10, de Polyamide 6,12 ainsi que de copolyamides qui sont édifiés en proportions dominantes à partir de monomères des polyamides mentionnés ci-dessus et dont la viscosité se situe dans la plage de 2,5 à 4,0.

8. Utilisation de polyamides hydrophobes thermoplastiques doués de fluidité suivant les revendications 1 à 7 pour la production de pièces moulées par le procédé de moulage par injection.

9. Pièces moulées en polyamides suivant les revendications 1 à 7.